# EUROPEAN PATENT APPLICATION

(11) **EP 2 258 544 A1**
(43) Date of publication of application: **08.12.2010**
(21) Application number: 10164940.8
(22) Date of filing: 04.06.2010
(51) Int. Cl.: B31D 3/02, B32B 3/12, E04C 2/36, B32B 37/14

(54) **Honeycomb panel and its production**

(30) Priority: 04.06.2009 NL 2002963
(71) Applicant: Axxion Technology B.V., 8013 NK Zwolle (NL)
(72) Inventor: Wiegersma, Wieger, 8013 NK Zwolle (NL)
(74) Representative: Swinkels, Bart Willem

(57) **Abstract**

The invention relates to a method for processing a continuous honeycomb panel, said method comprising the subsequent steps of producing a continuous honeycomb panel from strips of material to form the continuous honeycomb panel in compressed form, at least partially expanding said compressed continuous paper honeycomb, producing a series of spaced cuts in at least one of the edges of said strips, and applying pressure on said at least one cut edge for bending said cut edge.

The invention further relates to a paper honeycomb panel comprising series of paper strips adhered together so as to form said honeycomb panel, wherein said paper strips comprise a series of spaced cuts of equal depth in at least one edge of said strips, and said ends have been bent before a line connecting said the ends of said cuts.

The invention further relates to a honeycomb panel processing apparatus, comprising at least two opposite rolls defining a nip between them for passing at least partially expanded honeycomb panel, said rolls comprising circumferential cutting edges extending within said nip.

The honeycomb panel has improved adhesion when adhered to a cladding sheet.

## Description

### Background

The present invention relates to a method for producing a honeycomb panel, a paper honeycomb panel, and an apparatus for producing such a honeycomb panel.

WO2009045095 discloses amongst others a method for producing paper honeycomb panels which can be used in composite panels. Traditionally, these paper honeycomb panels described in the international application are also used in for instance doors and other panels. In these traditional applications, the edges of the honeycombs of the honeycomb panels are provided with an adhesive material, and subsequently they are attached or adhered to one panel or panels at both sides. These panels can be paper panels or wooden panels, for instance plywood.

GB-1063103 already disclosed a method for producing an unexpanded honeycomb panel. US-4.133.712 discloses an apparatus for forming honeycomb material. Here, many sheets from continuous rolls of stock are longitudinally provided with stripes of adhesive. For each subsequent sheet, the adhesive is provided in a staggered way with respect to the previous sheet. The sheets are adhered face to face and strips are cut which are again glued together. In this way, a continuous, unexpanded or compressed honeycomb or honeycomb material can be made. US-6.858.109 also discloses a method and machine for producing a honeycomb, in that disclosure referred to as honeycomb core.

US-3.257,253 and US-3.413.177 furthermore disclose a process for making in particular paper panels having a honeycomb core. To that end, after its production unexpanded honeycomb core is expanded, and face sheet are together with expanded honeycomb core. Between honeycomb core and face sheet or sheets, adhesive is provided so as to produce a unitary panel with a honeycomb core. Again, the honeycomb material comprises strips of material which are glued together using lines of adhesive on their faces. Next, their edges are glued upon the face sheets.

The adhesion of the honeycomb onto the face sheets needs improvement.

FR1011146 of 19 juni 1952 discloses a construction panel having two plates of for instance metal, connected via honeycomb material of for instance paper of cardboard. The honeycomb material is produced by providing strips of material, glueing the strips together, providing cuts in the edges of the strips by means of a guillotine or die, expanding the honeycomb material, and bending the edges. The cuts are relatively deep for providing an almost continues plane of bent ende of the edges. This process is discontinuous, is relatively slow and uses deep cuts.

WO 02/45952 discloses a stack assemblage of metallic, paper, or paperlike sheets or strips of material secured to one another to define a honeycomb core structure when the assemblage is expanded and flange tabs provided on the opposite edges of said stack. When the stack is fully expanded, the flange tabs can be deformed into flange orientation on the opposite edges of said stack. The flanges are relatively large compared to the height of the honeycomb material. Furthermore, the edges require extensive processing for forming said flanges, making fast production a problem. Folding said flanges required a seperate step using special tools. Furthermore, the honeycomb core is produced by adhering individual strips to one another, limiting production speed even further.

DE4237025 of 13 mei 1993 discloses that for the manufacture of a sandwich panel, a core is formed from strips of fibre-containing material such as cardboard or paper, the breadthwise direction of which strips coincides with the thickness direction of the panel, and a covering sheet is subsequently bonded to each of the longitudinal sides of the core. In order to improve this bond, after the core is formed, at least one of its longitudinal sides is treated with a liquid for softening the edges of the strips at that side, following which the strips are exposed to a pressure force in the thickness direction of the panel, for upsetting each moistened edge, and an adhesive is applied to each edge thus upset, for the purpose offixing a covering sheet thereon. The device used here comprises two moistening elements, together forming a nip through which the core can be conveyed, at such speed that sufficient moisture can be taken up for moistening the edges at the longitudinal sides of the core, while the central part of the core remains dry. It is clear that this method has limited speed, and that the strength of the core can be compromised. The effect of the treatment on the strength and the resulting height of the core are not controllable.

US5913766 of 22 juni 1999 discloses an apparatus for crushing a honeycomb panel. Furthermore, it discloses a compression roller and an apparatus for cutting and crushing a honeycomp panel. This should produce a slit in the honeycomb panel, i.e in a plate and the underlaying honeycomb material. It is not intended to process honeycomb material. In fact, it structrurally weakens the honeycomb panel.

### Summary of the Invention

The invention aims to provide a honeycomb panel and a method for producing a honeycomb panel which is cheap, and which has better adherence to subsequently attached panels.

According to a first aspect of the invention this is realized with a method for processing a continuous honeycomb panel, said method comprising the subsequent steps of producing a continuous honeycomb panel from strips of material to form the continuous honeycomb panel in compressed form, at least partially expanding said compressed continuous paper honeycomb, producing a series of spaced cuts in at least one of the edges of said strips, and applying pressure on said at least one cut edge for bending said cut edge.

The invention further relates to a paper honeycomb panel comprising series of paper strips adhered together so as to form said honeycomb panel, wherein said paper strips comprise a series of spaced cuts of equal depth in at least one edge of said strips, and said ends have been bent before a line connecting said the ends of said cuts.

The invention further relates to an apparatus according to a honeycomb panel processing apparatus, comprising at least two opposite rolls defining a nip between them for passing at least partially expanded honeycomb panel, said rolls comprising circumferential cutting edges extending within said nip.

It was found that the honeycomb panel provided a larger surface for adhering the edges of the honeycomb panels' strips onto the face sheets. Furthermore, it was found that using this method, additionally the accuracy of the thickness of the honeycomb material increased, in particular the standard deviation of the thickness in expanded condition decreased.

In this document, the honeycomb panel may also be referred to as honeycomb core, honeycomb material or honeycomb core material. It refers to the honeycomb panel as such, before it is used in further products like a composite panel. In this description, a composite panel refers to a panel which is composed of one ore more honeycomb panels in combination with one or more cladding sheet or sheets. Often, a honeycomb panel is on its both sides provided with a cladding sheet. Such a cladding sheet will often be a layer of wood, plywood, cardboard, paper, or the like. A composite panel may also comprise more layers of honeycomb panel, with cladding sheets of layer between them.

In this application, it is explained that the honeycomb panel is adhered to other panels or sheets or claddings, in general, layers of material, in order to form a composite panel. In fact, often the honeycomb panel is adhered using glue, adhesive, or another type of curable composition or pressure sensitive adhesive.

In an embodiment, the fibre web used for the honeycomb material is a web which largely consists of cellulose fibres. The fibres may comprise a small amount of other fibres which are know as reinforcement fibres in paper of paper-like webs. The paper can be reinforced by using chemical additives to enhance the connection between the fibres. Also the rigidity of the fibres can be enhanced by using specific chemical additives as isocyanaat or isocyanate-functional compounds.

In an embodiment, the fibre web used for the honeycomb material is a paper web. Usually, CCM (= Corrugated Core Material), Liner, Kraft or Semi Chemical paper will be used.

The use of a continuous honeycomb material allows the production of large panels, with a width of about 1.2-2.5 meter of even more. The upper limit of the width is only limited by the width of rolls of paper. These panels, because of the use of continuous honeycomb material, have a uniform strength without more rigid stripes or part, which result from the use of for instance various blocks of honeycomb material in one panel, or honeycomb core material produced in an other, discontinuous way. The panels may have an endless length, i.e., in practice one is free to chose the desired length.

In an embodiment the curable composition is a curable resin composition and comprises at least one curable resin. In this description, a curable resin is a resin which has a polymer backbone with functional groups allowing the resin to crosslink in order to form a thermoharding synthetic material. In an embodiment, the curable resin is selected from the group consisting of polyester, polyurethane, phenol-formaldehyde resins PF, urea-formaldehyde resins UF, melamine resins MF, melamine-phenol-formaldehyde resins MP, unsaturated polyester resins UP, epoxy resins EP, diallylphthalate resins DAP, silicone resins, polyurethane resins PUR, and combinations thereof.

In another embodiment, the curable composition is a composition of crosslinkable monomers or pre-polymers, curable under the influence of heat (IR radiation), UV radiation. Examples of these components comprise caprolactam, (meth)acrylate, monomomers which polymerize via ring opening polymerization, e.g. caprolactame, laurinlactame, lactone etc. , monomers or prepolymers, which polymerize or cure under irradiation of UV light: acrylates, e.g. Epoxyacrylate, Urethanacrylate, polyesteracrylate, Polyetheracrylate, Acrylacrylate, Melaminacrylate, Siliconeacrylate (Organically modified ceramics, ORMOCERE), monomers or prepolymers which polymerize or cure under the influence of UV Light or heat polymerisation, eventually in the presence of radical starters, e.g. azobisisobutyronitrile (ABIN): acrylates, vinylether, vinylester etc., monomers or prepolymers which polymerize or cure or crosslinking under the influence of or induced by irradiation with electron beams.

In an embodiment, the curable composition may cure of crosslink or polymerize under influence of heat production inside the honeycomb structure by irradiation with microwaves in the presence of monomers, prepolymers or any kind of reactive resin, which due to its chemical structure is capable of microwave energy absorption, e.g. all chemical structures, which contain polar functional groups, preferably hydroxyl groups and combinations thereof (e.g., hybrid resins) and combinations with the above given duroplastic resins (PUR, UP etc.).

In an embodiment, the curable composition comprises a thixotrophy modifying component. In particular the thixotrophy modifying component is a component which increases the viscosity when no force such as a sheer force is applied to the resin. These components, as such, are known to the skilled person. A suitable thixotrophy additive is for instance a product marketed under the name of Aerosil® , which is a "pyrogenic silicic acid", also called a nano size silicium carbid. Other thixotophy modifying agent which may be used are bentonite, kaoline, and alginic acid. These components are mixed into the curable composition before it is applied.

In an embodiment, the honeycomb core material is produced by attaching strips of paper to one another. In an embodiment, the honeycomb core material is produced using at least two band of paper-like material. In a further embodiment a multiplicity of each time two bands of paper are used. In this embodiment, there is are first bands of paper and second bands of paper.

The method is described for two bands of paper-like web, but it will be evident that multitudes of two bands can be used. The amount of bands is usually limited by the amount of sheets that can be properly cut. In order to form the honeycomb core material, adhesive composition is applied along longitudinal lines, regularly spaced at a line distance which determines the size of the cells, on the first band of paper-like material. Next, the second band of paper-like material is applied on the first band of paper-like material, adhesive composition is applied on the second band of paper again along longitudinal lines, regularly spaced at about the same line distance as the adhesive on the first band, but between the lines of adhesive on the first band. Usually, the offset will be about half the spacing of the lines on the first band. In that way, the cells will be almost hexagonally shaped.

Next, a strip is cut off the end of the bands which are attached to one another using the adhesive composition. The width of the strip determines the height of the honeycomb material. A next stack of strips is applied on the previous one, thus creating an endless honeycomb core material. The width of the stack of strips thus determines the height of the honeycomb core material in its un-expander form.

The length of the strips is in fact the width of the final honeycomb. Produced in such a way an endless flow of honeycomb is created that is still compact. The use in the panels requires the expanding of the honeycomb, hence by this, opening the cell structure and establishing the opened web of cells. This results in a reduction of the width of the honeycomb to a ratio of 0,75 to 0,79.

For creating isoform properties, it is of importance to have continuous honeycomb web over the full width of a composite panel. The width of the composite panel may require specifically large honeycomb width like 2600 mm, 2800 mm and more.

In this respect a symmetric cell form on every place in the web of honeycomb is required. For the technical properties in relation to the required strength and bending characteristics small cell sizes as cells with for example 10 mm, 8 mm or even smaller inner circle.

In an embodiment of the invention, said step of producing the continuous paper honeycomb comprises the steps of providing sets of two rolls of paper material, and unrolling set of two rolls into a first and second band of paper material. A further step may be applying adhesive material along lines on one side of said first bands of paper material of said sets. A next step can be applying adhesive material along lines on one side of said second bands of paper material of said sets, said lines halve a pitch offset with respect to said lines on said first bands of paper material. Using a combination of these steps allows the production of an in principle endless honeycomb material and with a large width, up to 2.5 meters and more.

In another embodiment, the method further comprises the step of processing sides of said strips of paper of said honeycomb for increasing the adhesive surface of said honeycomb with said panels.

In an embodiment of the method, said cuts are produced in both opposite edges of said strips, and pressure is applied to both edges for bending both edges. Thus, a controlled wrinkled edge is provided.

In an embodiment of the method, said opposite cut edged are bent in the same direction.

In an embodiment of the method, said honeycomb panel is passed between at least one set of rolls, at least one of said rolls provided with circumferential and spaced cutting edges.

In an embodiment of the method, both rolls of said set or sets of rolls are provided with said circumferential cutting edges.

In an embodiment of the method, said strips have a strip height before said cuts are applied, and said rolls have a mutual distance defining a nip which is less than said strip height, in particular said rolls between said cutting edges have a flat roll surface and the distance between said flat surfaces is less than said strip height. In an embodiment, the distance between roll surfaces is about 0.3-1 mm less than the strip height. Tests with strips with a height of between 11-200 mm show promising results.

In an embodiment of the paper honeycomb panel, said cuts have a depth of about 0.2-0.6 mm.

In an embodiments, the cuts are regularly spaced. In an embodiment of the paper honeycomb panel, said cuts have a spacing of about 1.5-3 mm.

In an embodiment of the paper honeycomb panel, said cells have an inscribed circle diameter of 6-70 mm.

In an embodiment of the paper honeycomb panel, the panel has a height of 8-100 mm.

In an embodiment of the paper honeycomb panel, the panel has a width in expanded state of about 1.2-2.5 m.

The invention further relates to an apparatus or a method comprising one or more of the characterising features described in the description and/or shown in the attached drawings.

The various aspects discussed in this patent can be combined in order to provide additional advantages.

### Description of the Drawings

The invention will be further elucidated referring to an embodiment of a method for producing a honeycomb panel and an apparatus and a method for producing it, and shown in the attached drawings, showing in:
Fig. 1 a top view of a part of a composite panel of the invention;
fig. 2 a top view of a detail of a part of a honeycomb core;
fig. 3 a transverse cross section of a part of the composite panel of fig. 1;
fig. 4 schematically the production step of a continuous honeycomb core;
fig. 5 the step of expanding the honeycomb core material;
fig. 6 a detail of the processed edges of a honecomb material;
fig. 7 a perspective view of an apparatus with one set of cooperating rolls;
fig. 8 detailed view of a roller;
fig 8A a detail of the roll of figure 8;
fig. 9 a schematic front view of an apparatus with multiple sets of cooperating rolls, and
fig. 10 a schematic top view of the apparatus of fig. 9;

### Detailed Description of Embodiments

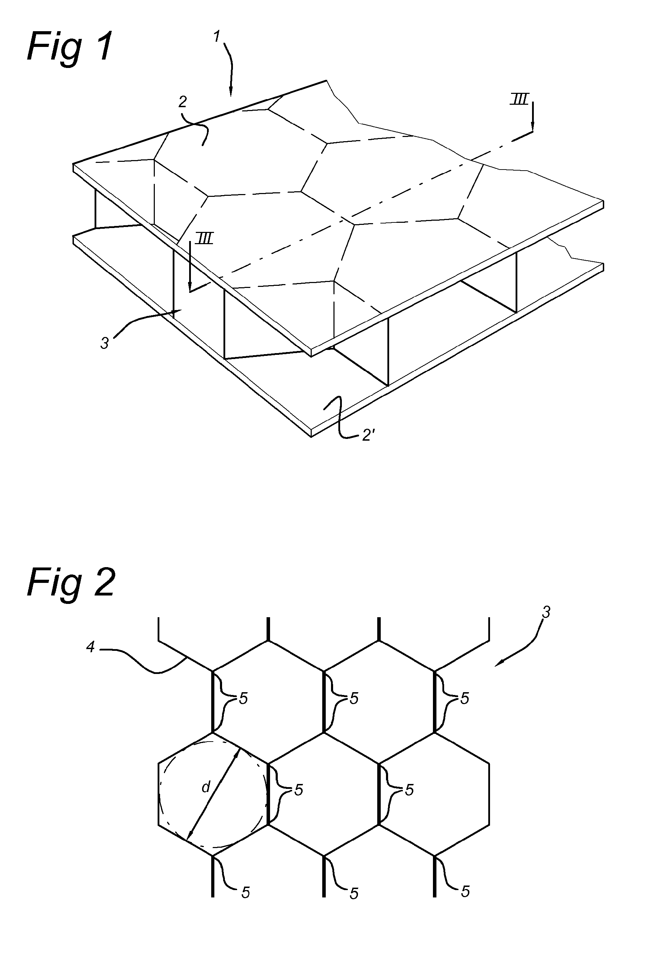

In figure 1, a top view of an example of a composite panel according to the present invention is shown. This composite panel 1 has cladding sheets 2, 2' and a honeycomb core 3.

In figure 2, a top view of an example of a honeycomb panel 3 is shown. It is produced from strips of material 4, attached to one another at the regions 5, where double layers of material exist. A well-known manner of attaching the strips of material to one another is using glue. To that end, glue can be applied at the entire contact region 5. Another method is applying dots or stripes of glue, for instance near the angled areas. The regions 5 may be very narrow. In that case, the cells or the honeycomb material can be almost rectangular or diamond-shaped. In fact, depending on the quality of the material used for the honeycomb, the cells can be almost round. For attaching the material, hot-melt glue can be used which is well-known in the art. It may also be possible to use any other type of adhesive known in the production of honeycomb panel.

In figure 2, it is further indicated that the honeycomb panel can be specified using the size of the cells. Usually, the diameter of the inscribing circle d is used as a measure to define the honeycomb panel. When honeycomb panel is used which is not fully expanded, leading to cells which are have a elliptic shape, the inscribed circle is the circle which would result if the material were fully expanded.

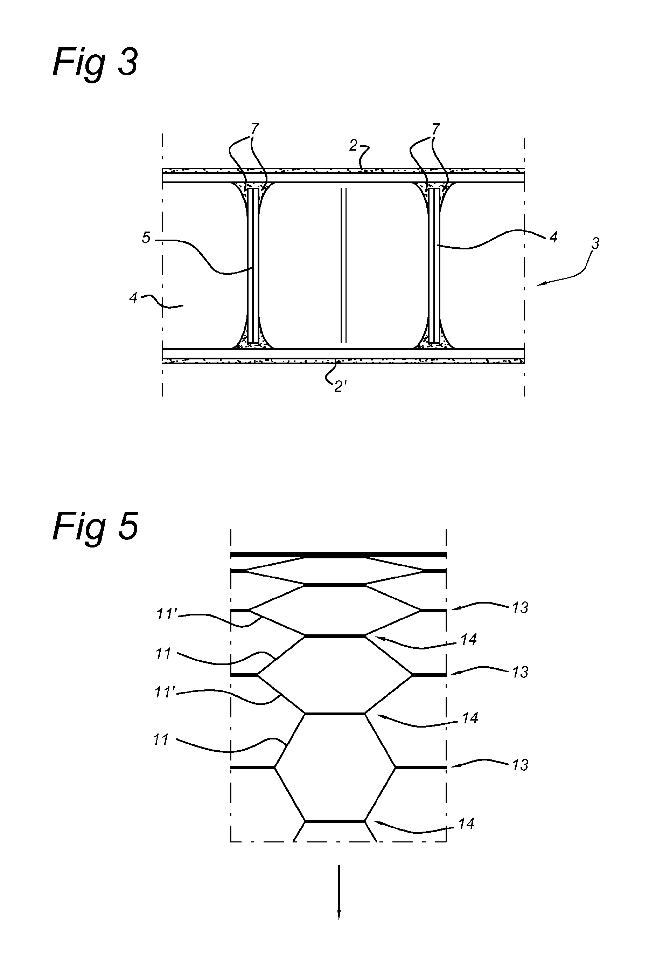

In figure 3, a cross-section of the composite panel of figure 1 along lines III-III is shown. The cladding sheets or panels 2, 2' can be composed of fibrous material 6. The edges of the strips of material 4 of the honeycomb material are provided with adhesive material 7. In an embodiment, a thixotropy-modifying agent is added to the curable composition before it is used for adhering or attaching the material of the cladding sheets 2, 2' and the honeycomb panel 3. In this way, meniscuses of cured material are formed at the locations of areas where the honeycomb material and the cladding sheets 2 meet, as indicated in the drawing. In an embodiment, the honeycomb core material is impregnated with an isocyanate or isocyanate-functional material. This will cure in the presence of moisture and build a foamed material and can provide an increased resistance against pressure forces on the composite panel. In fact, the honeycomb panel can be used in the composite panel of WO2009045095, which is in this document referenced as if fully set forth. In particular, in this application of the current invention, the cladding sheets are wood or plywood sheets or MDF, fibre board, chipboard, paper, cardboard, or even corrugated cardboard panels. The honeycomb panel is adhered between these sheets of panels, for instance using a suitable glue or other adhesive. Subsequently the panels may be provided with a foil layer, lacquer or paint.

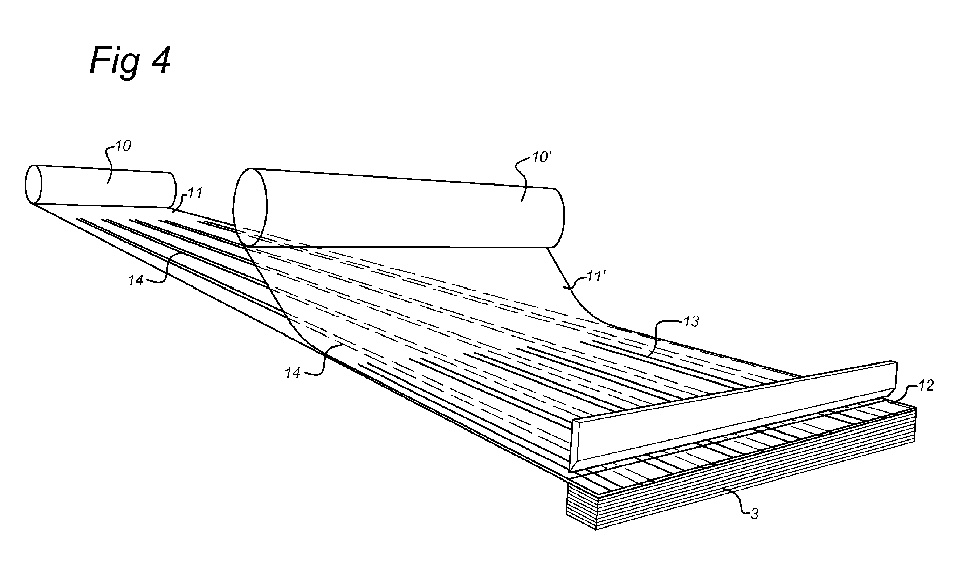

In figure 4, a production process for the honeycomb panel is shown. In this example, two rolls of material 10, 10' are used, but for increased production speed, a plurality of sets of two rolls may be used. Resulting in a thicker stack 12 which is added each time.

In this process, two rolls 10, 10' of material are provided. These rolls are unrolled parallel to one another, resulting in bands 11, 11'. These bands 11, 11' are placed on top of one another. First, however, the lower band 11 is provided with adhesive material. The adhesive material is provided in an area 14 indicated with two lines. These areas are equally spread at a regular distance or spacing, at a predetermined pitch which determines part of the diameter of the inscribed circle of the cells of the honeycomb. As already shown in figure 2, the width of the area more or less determines the length of one part of the honeycomb (indicated with number 5 in fig. 2). The spacing of the areas 14 more or less determines the length of the other parts of the honeycomb.

The adhesive material within areas 14 may be applied as continuous lines or as dots. This, however, as known to the skilled person. The nature of the adhesive material is also well known to the skilled person. In many cases, a PVA-c, Waterglass, Starch based glues or hot melt glue will be used.

After the adhesive material is applied on top of the lower band of material 11, the upper band 11' is placed on top of the lower band 11', and pressure may be applied, for instance using rollers. Next, adhesive material is applied on top of the upper band 11'. The adhesive material is applied within regions 13, again regularly spaced. These areas, however, are offset with respect to the areas 14 with half the spacing of the previous regions 14, as indicated. They also have the same pitch. Thus, staggered lines of adhesive result on the subsequent bands of material. In this way, the honeycomb with the hexagon shaped cells can be produced.

At the ends of the bands 11, 11' a strip 12 is cut from the bands 11, 11'. As indicated in the drawing, after cutting the bands are advanced further and the stack of honeycomb material 3 (in an unexpanded state) are lowered. The band is applied onto the already formed stack and again a strips is cut. This procedure is repeated. Thus, almost endless, non-expanded honeycomb panel is formed.

In figure 5, the expanding of honeycomb material after it was produced from strips of material, shown in figure 2, is demonstrated. Methods for expanding the honeycomb material are known to the skilled person. In this drawing, the parts resulting from the method described in figure 4 have the numbers used in figure 2.

The composite panels can be produced in very large areas while having homogeneous material properties. As the honeycomb panel is continuous, there are no regions or parts which have a larger stiffness, which may result in cracks or delamination when a load is placed onto it. As mentioned above, it may be produced in widths of up to 2.5 meters or more, and in any desired length. It can be very light, and cheap to produce. It may thus be used for doors, packaging, furniture, constructive parts, for instance. The processes of cutting, expanding, providing cladding sheet and adhering them together can result in periodic and non-periodic inhomogeneous properties of the panel.

When adhering the honeycomb core to cladding sheet, it was found that the connection was not always homogeneous. Due to the standard deviation in the height of the honeycomb material, when the height was smaller that the distance between the cladding sheets, there could be two possible situations. In one situation, a space remained between the edge of the strips of the honeycomb panel. In some instances, this would be filled with adhesive, in other instances, no adhesion would occur. In the second situation, the cladding sheet would be pressed on the edge of the strip or strips, resulting in a slight wave in the cladding sheet. This would show for instance after application of a high quality finishing layer.

It is also possible that the height of the honeycomb panel at certain spots is greater than the distance between cladding sheets. This again results in two possible situation occurring in practise. In the first situation, In some cases this would result in a slight bending of the strip, which in turn results in a local weakening of the resulting panel. In the second situation, the cladding sheet would bend a little, which again shows in a finishing layer, for instance a paint layer.

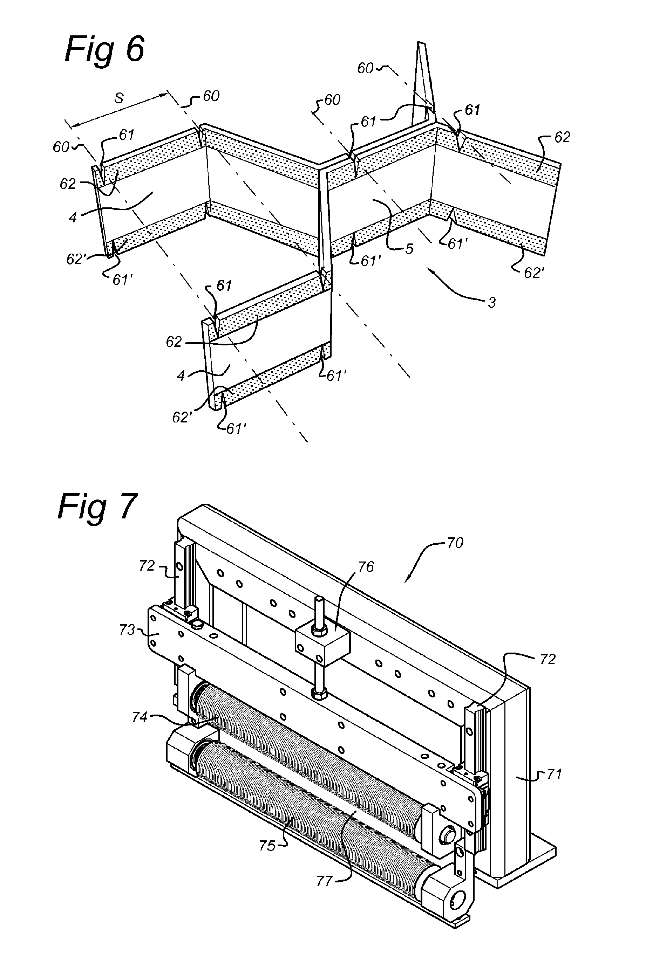

It was found that processing the honeycomb material in such a way that in expanded form the edges of its strips are regularly cut up until a small part of the width of a strip, and subsequently forced to bend a little at the line connecting the end of the cuts, this would solve many of the problems. Furthermore, it was found that this could also result in a lessening of the standard deviation in the height of the honeycomb panel. Furthermore, the weakening in the transverse direction of the honeycomb panel was negligible. In figure 6, the result of this processing step is shown.

Figure 6 shows a perspective view of a small part of a honeycomb panel 3. The strips 4 of the honeycomb are indicated, and a position where these strips are adhered is indicated with reference number 5 as before. In the lower edges and the upper edges of the strips 4, cuts 61' respectively 61 are indicated. These cuts are made at regular intervals. The spacing is indicated with 's'. Furthermore, it is indicated that the edged, indicated with 62 for the upper edges and 62' for the lower edges, are bend a little. In practise, these edges can de bent even more, up to about 90 degrees. These bent edges 62, 62' result in a larger area onto which adhesive material can be applied. In practise, the edges bend along a line above a line connecting the ends of the cuts. Furthermore, if the cuts 61, 61' or, more precise, the distance between the ends of each pair of opposite cuts 61, 61', can be made very precise, the accuracy of the honeycomb height can be made very accurately. In this embodiment, the cuts 61 in the upper edge and the cuts 61 in the lower edge are opposite one another. The rolls in fact wrinkle the edges.

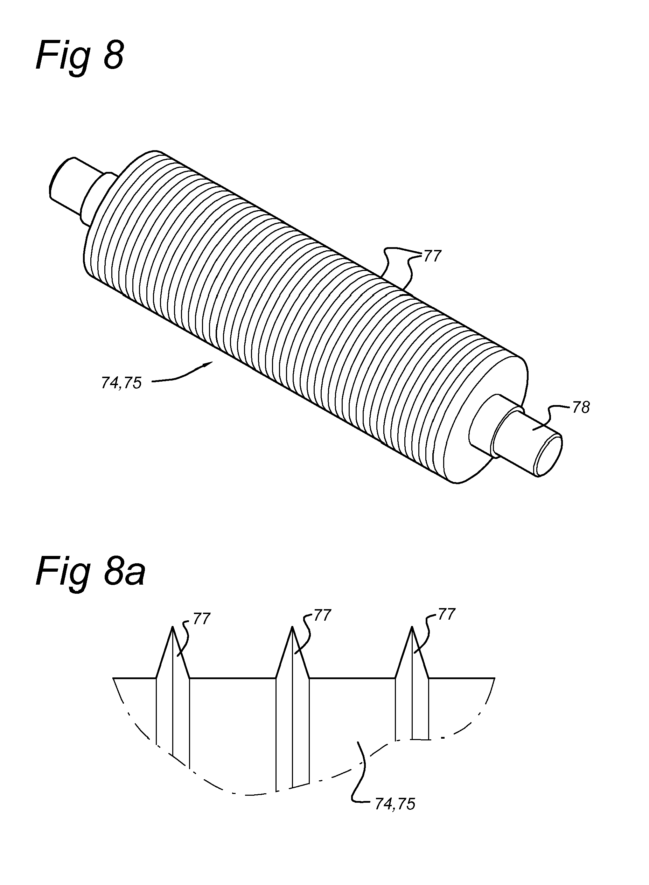

It was found that the processing indicated in figure 6 could well be made using an apparatus comprising two opposite rolls having circumferential cutting edges. The apparatus show in figure 7 is an example of such an apparatus. This apparatus for processing expanded honeycomb panel 70 has a frame 71. The frame comprises two rails 72 holding a bar 73. The rails are vertical positioned on frame 71 and bar 73 is slidable so as to allow adjustment of the position of roll 74. Below upper roll 74 a corresponding lower roll 75 is positioned to define a nip 79 between the rolls 74 and 75. In figure 8, on example of roll 74, 75 is depicted in further detail. The roll 74, 75 has a series of circumferential cutting edges 77. In this embodiment, these cutting edges 77 are equally spaced. Between the cutting edges 77, the roll has a planar surface. A detail of two cutting edges 77 and the surface of the roll between these edges 77 is shown in figure 8A. The detail of the roll 74, 75 shows a circle cylindrical roll surface having circumferential cutting knives 77. In this embodiment, the cutting knives 77 are spaced about 2 mm. The knives can have a height of about 0.2-0.6 mm. In an application in which honeycomb panel with a height of between 10 and 200 mm was processed, about 0.3-0.5 mm was used. In an embodiment of the apparatus, it was found that driving at least one of the rolls 74, 75 shows an improvement as to the processed honeycomb as well as to the wear of the knives 77. In this embodiment, the rolls are positioned with cutting edges almost opposite one another.

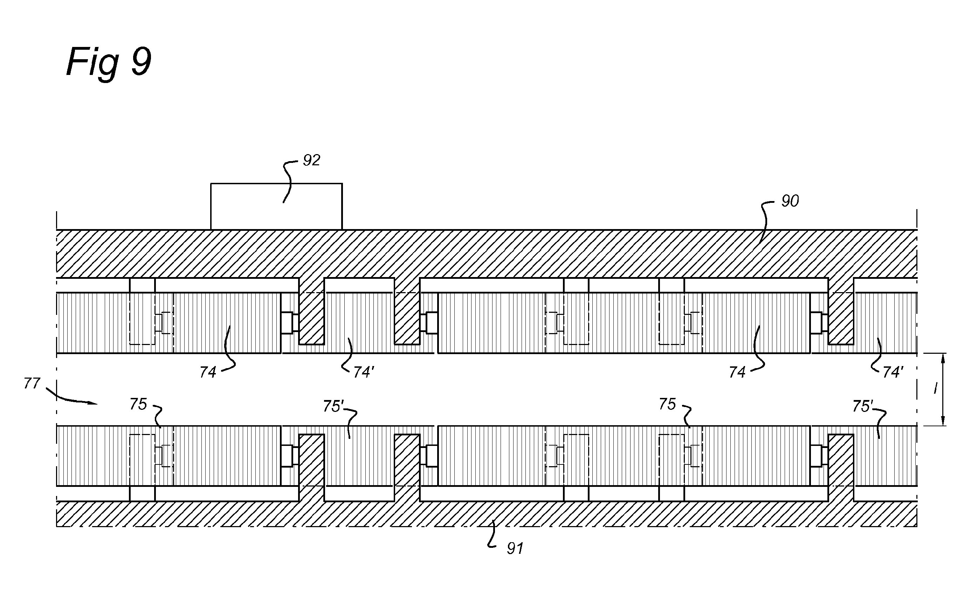

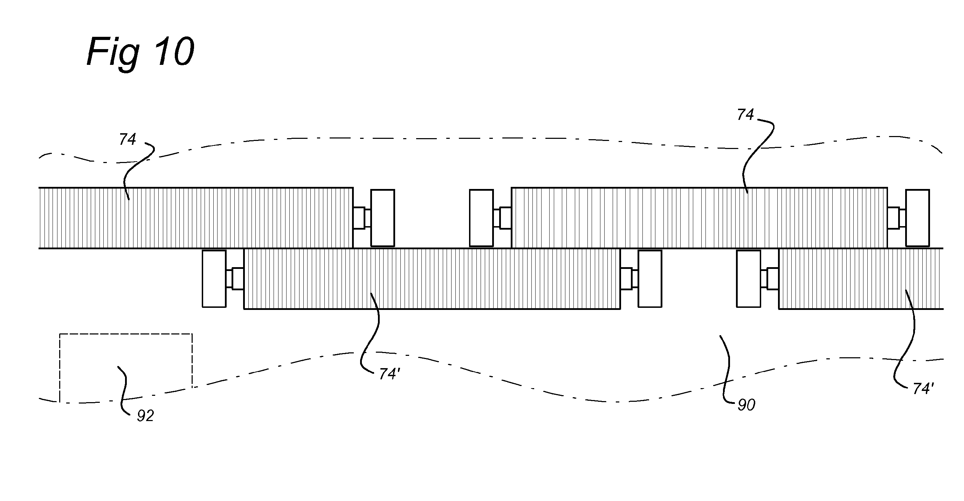

In order to increase accuracy, it is of importance that the nip 79 between a pair of rolls 74, 75 is as accurate as possible. At the same time, the circumferential knives 77 are prone to wear and become dull. In practise, the honeycomb panel in its expanded condition can have a width of up to 2-2.5 metres. Making a set of rolls 74, 75 this wide and still accurate within 0.1 mm, requires complex solutions and high costs. In figures 9 and 10, an alternative honeycomb processing apparatus is shown in front view (fig. 9) and top view (figure 10) in a schematic way. In this embodiment, two staggers rows of pair of rolls (from top view: row 74 and row of rolls 74') are used, one row overlapping the other in order to present almost one nip 79. In this way, the upper frame 90 and lower frame can be very ridged. In this embodiment, a drive 92 drives the upper rolls 74, 74'.

For both apparatus, the circumferential speed of the driven roll or rolls has about the same magnitude as the linear speed of honeycomb panel passing the rolls. In an embodiment, the speed of the rolls and of the honeycomb panel is about equal. In that way, wear on the circumferential cutting edge is reduced. The apparatus prevents the production of dust. Furthermore, as the nip 79 can be defined very accurately, it is possible to define the height of the honeycomb accurately. In fact, the pressure of the rolls on the edges of the strips wrinkles the edges of the strips of the honeycomb panel.

In the process, the cuts are produced and subsequently the honeycomb is processed further, for instance provided with glue for attaching the cladding sheets 2, 2'. In fact, the processing apparatus can be in line with further processing stations at a locations where honeycomb is processed for use, for instance between cladding sheets.

It will also be evident that the above description and drawings are included to illustrate some embodiments of the invention, and not to limit its scope of protection. Starting from this disclosure, many more embodiments will be evident to a skilled person which are within the scope of protection and the essence of this invention and which are obvious combinations of prior art techniques and the disclosure of this patent.

## Claims

1. A method for processing a continuous paper honeycomb panel, said method comprising the subsequent steps of:
- producing a continuous paper honeycomb (3) from strips of material (4) to form the continuous paper honeycomb (3) in compressed form;
- at least partially expanding said compressed continuous paper honeycomb;
- producing a series of spaced cuts (61, 61') in at least one of the edges (62, 62') of said strips (4), and
- applying pressure on said at least one cut edge (62, 62') for bending said cut edge (62, 62').

2. The method according to claim 1, wherein said cuts (61, 61') are produced in both opposite edges (62, 62') of said strips (4), and pressure is applied to both edges for bending both edges.

3. The method according to claim 2, wherein said opposite cut edged are bent in the same direction.

4. The method according to any one of the preceding claims, wherein said honeycomb panel is passed between at least one set of rolls (74, 75), at least one of said rolls provided with circumferential and spaced cutting edges (77).

5. The method of claim 4, wherein both rolls of said set or sets of rolls are provided with said circumferential cutting edges (77).

6. The method of claims 4-5, wherein said strips have a strip height before said cuts are applied, and said rolls have a mutual distance defining a nip (79) which is less than said strip height, in particular said rolls (74, 75) between said cutting edges (77) have a flat roll surface and the distance between said flat surfaces is less than said strip height, in particular about 0.3-1 mm less than the strip height.

7. A paper honeycomb panel (3) comprising series of paper strips (4) adhered together so as to form said honeycomb panel, wherein said paper strips (4) comprise a series of spaced cuts (61, 61') of equal depth in at least one edge (62, 62') of said strips (4), and said edges have been bent before or at a line connecting ends of said cuts.

8. The paper honeycomb panel according to claim 7, wherein said cuts (61, 61') have a depth of about 0.2-0.6 mm, in an embodiment said cuts are regularly spaced in an embodiment said cuts have a spacing (s) of about 1.5-3 mm.

9. The paper honeycomb panel of claims 7-8, wherein said cells have an inscribed circle diameter (d) of 6-70 mm.

10. The honeycomb panel of claims 7-9, having a height of 8-100 mm, in an embodiment the honeycomb panel (3) has a width in expanded state of about 1.2-2.5 m.

11. A honeycomb panel processing apparatus (70), comprising at least two opposite rolls (74, 75) defining a nip (79) between them for passing at least partially expanded honeycomb panel (3), said rolls comprising series of circumferential cutting edges (77) extending within said nip (79).

12. The apparatus (70) of claim 11, wherein said rolls have a flat roll surface between said cutting edges (77).

13. The apparatus of claim 11 or 12, further comprising a actuator for driving at least one of said opposite rolls, in particular said actuator is set for driving said at least one roll to rotate at a rotational speed of about the linear speed honeycomb panel passing said nip.

14. The apparatus of claims 11-13, comprising a series (74, 74', 75, 75' ) of said two opposite rolls, said series of opposite mutually positioned for processing an entire width of honeycomb panel wider than the width of one set of opposite rolls.

15. The apparatus of claims 11-14, further comprising an expander for at least partially expanding said honeycomb panel, said expander positioned upstream with respect to said opposite rolls for at least partially expanding honeycomb panel before it enters said nip.
